(19) Europäisches Patentamt
European Patent Office
Office européen des brevets

(11) **EP 3 767 534 B1**

(12) **EUROPEAN PATENT SPECIFICATION**

(45) Date of publication and mention
of the grant of the patent:
**11.02.2026 Bulletin 2026/07**

(51) International Patent Classification (IPC):
**G06V 10/776** (2022.01)   **G06V 10/82** (2022.01)

(52) Cooperative Patent Classification (CPC):
**G06V 10/82; G06V 10/776**

(21) Application number: **19186798.5**

(22) Date of filing: **17.07.2019**

(54) **DEVICE AND METHOD FOR EVALUATING A SALIENCY MAP DETERMINER**

VORRICHTUNG UND VERFAHREN ZUR BEURTEILUNG EINES DETERMINIERERS EINER SALIZENZKARTE

DISPOSITIF ET PROCÉDÉ D'ÉVALUATION D'UN DÉTERMINATEUR DE CARTE DE RELIEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.01.2021 Bulletin 2021/03**

(73) Proprietor: **Robert Bosch GmbH**
**70442 Stuttgart (DE)**

(72) Inventors:
• **Fischer, Volker**
**71229 Leonberg (DE)**
• **Khoreva, Anna**
**70197 Stuttgart (DE)**
• **Munoz Delgado, Andres Mauricio**
**71263 Weil Der Stadt (DE)**
• **Hoyer, Lukas**
**39175 Biederitz (DE)**
• **Katiyar, Prateek**
**72074 Tuebingen (DE)**

(56) References cited:
• **GREGORY PLUMB ET AL: "Regularizing Black-box Models for Improved Interpretability (HILL 2019 Version)", ARXIV.ORG, CORNELL UNIVERSITY LIBRARY, 201 OLIN LIBRARY CORNELL UNIVERSITY ITHACA, NY 14853, 31 May 2019 (2019-05-31), XP081366825**

• **LUKAS HOYER ET AL: "Grid Saliency for Context Explanations of Semantic Segmentation", ARXIV.ORG, CORNELL UNIVERSITY LIBRARY, 201 OLIN LIBRARY CORNELL UNIVERSITY ITHACA, NY 14853, 30 July 2019 (2019-07-30), XP081527821**

• **AHMADI MAHDI ET AL: "Context-Aware Saliency Map Generation Using Semantic Segmentation", ELECTRICAL ENGINEERING (ICEE), IRANIAN CONFERENCE ON, IEEE, 8 May 2018 (2018-05-08), pages 616 - 620, XP033408753, ISBN: 978-1-5386-4914-5, [retrieved on 20180925], DOI: 10.1109/ICEE.2018.8472577**

• **BO GAO ET AL: "Stochastic Context-Aware Saliency Detection", COMPUTER AND MANAGEMENT (CAMAN), 2011 INTERNATIONAL CONFERENCE ON, IEEE, 19 May 2011 (2011-05-19), pages 1 - 5, XP031877030, ISBN: 978-1-4244-9282-4, DOI: 10.1109/ CAMAN.2011.5778769**

## Description

The present disclosure relates to devices and methods for evaluating a saliency map determiner.

Neural networks are becoming more and more widely used to classify images into a pre-defined number of classes. Understanding how the neural network has reached its results can greatly help in determining how trustworthy the classification is, but is alas notoriously difficult.

The publication "Regularizing Black-box Models for Improved Interpretability (HILL 2019 Version", by Gregory Plumb et al., Arxiv.org, Cornell University Library, 201 Olin Library Cornell University Ithaca, NY 14853, 31 May 2019 describes adding a regularization term to the loss function for training a model to encourage explainability of the model.

The publication "Deep inside convolutional networks: Visualising image classification models and saliency maps" by Karen Simonyan, Andrea Vedaldi, and Andrew Zisserman, in International Conference on Learning Representations (ICLR), 2013, describes interpreting a network decision making process by generating low-level visual explanations. Such and similar approaches mostly focus on the task of image classification and can be divided into two categories: gradient-based and perturbation-based methods.

The publication "Grid Saliency for Context Explanations of Semantic Segmentation" by Ahmadi Mahdi et al., Arxiv.org, Cornell University Library, 201 Olin Library Cornell University Ithaca, NY 14853, 30 July 2019 and the publication "Stochastic Context-Aware Saliency Detection" by Bo Gao et al., Computer and Management (CAMAN), IEEE, 19 May 2011, describe context aware saliency maps.

Gradient-based methods compute a saliency map that visualizes the sensitivity of each image pixel to the specific class prediction, which is obtained by backpropagating the gradient for this prediction with respect to the image and estimating how moving along the gradient influences the class output. Gradient based methods mostly rely on heuristics for backpropagation and may provide explanations which are not faithful to the model or data. Perturbation-based methods evaluate the class prediction change with respect to a perturbed image, e.g. for which specific regions of the image are replaced with mean image values or removed by applying blur or Gaussian noise.

Since not all approaches for saliency determination perform equally well, e.g. gradient-based methods are typically prone to noise, approaches are desirable which allow evaluating saliency determination methods.

The method and the device with the features of the independent claims 1 (first example) and 18 (twentieth example) allow an evaluation of saliency determination approaches, i.e. verification whether a saliency determination is indeed capable of identifying a saliency, e.g. a context taken into account by a neural network for a classification task.

Further examples are described in the following.

A method of evaluating a saliency map determiner as described by claim 1 provides a first example.

Adding the predefined pattern to the plurality of training images may include adding the predefined pattern to training images in correlation with the object. The features mentioned in this paragraph in combination with the first example provide a second example.

The method includes evaluating the saliency map determiner based on a comparison of context for the object for the neural network being trained on training images without adding the predefined pattern in correlation with the object and context for the object for the neural network being trained on training sensor data with adding the predefined pattern in correlation with the object. The features mentioned in this paragraph in combination with any one of the first example to second example provide a third example.

The method may include evaluating the saliency map determiner based on an overlap of a region of the image representing an instance of the object and a region of the saliency map for the instance of the object of the image. The features mentioned in this paragraph in combination with any one of the first example to third example provide a fourth example.

The method may include evaluating the saliency map determiner based a context specified by the saliency map outside a request region. The features mentioned in this paragraph in combination with any one of the first example to fourth example provide a fifth example.

Evaluating the saliency map determiner based on whether the determined saliency map includes context for the object introduced by adding the predefined pattern may include determining whether the saliency map includes a representation of the predefined pattern and evaluating the saliency map determiner based on whether the determined saliency map includes a representation of the predefined pattern. The features mentioned in this paragraph in combination with any one of the first example to fifth example provide a sixth example.

The plurality of training data set units may be part of a training data set including a multiplicity of further training images and the neural network is trained with the training data set. The features mentioned in this paragraph in combination with any one of the first example to sixth example provide a seventh example.

It may be that at least some of the further training images do not contain the object. The features mentioned in this paragraph in combination with the seventh example provide an eighth example.

At least some of the further training images may contain a further object. The features mentioned in this paragraph in combination with any one of the seventh example to eighth example provide a ninth example.

The method may include, after training the neural network, applying the neural network on an image including an instance of the object and the pattern and determining the saliency map based on the output of the neural network. The features mentioned in this paragraph in combination with any one of the first example to ninth example provide a tenth example. The features mentioned in this paragraph in combination with any one of the first example to ninth example provide a tenth example.

The method may include checking whether the neural network has learned a correlation between the pattern and the object and evaluating the saliency map determiner if the neural network has learned the correlation between the pattern and the object. The features mentioned in this paragraph in combination with any one of the first example to tenth example provide an eleventh example.

The predefined pattern may be a predefined combination of image data values. The features mentioned in this paragraph in combination with the eleventh example provide a twelfth example.

Each of the plurality of training images may include an instance of the object and adding the predefined pattern to a training image may include changing image data values of the training image other than image data values of the instance of the object to the predefined combination of sensor values. The features mentioned in this paragraph in combination with the twelfth example provide a thirteenth example.

The method may include training the neural network to identify the object. The features mentioned in this paragraph in combination with any one of the first example to thirteenth example provide a fourteenth example.

The method may include training the neural network for semantic segmentation or object classification. The features mentioned in this paragraph in combination with any one of the first example to fourteenth example provide a sixteenth example.

The pattern may include a texture. The features mentioned in this paragraph in combination with any one of the first example to sixteenth example provide a seventeenth example.

A device may be configured to perform a method of any one of the first example to nineteenth example. The feature mentioned in this paragraph provides a eighteenth example.

A computer program may have program instructions that are configured to, when executed by one or more processors, to make the one or more processors perform the method according to one or more of the first example to seventeenth example.

The computer program may be stored in a machine-readable storage medium.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows an example for object detection in an autonomous driving scenario.

Figure 2 shows an example of a neural network that can be used to classify images into a pre-defined number of classes.

Figure 3 illustrates a saliency determination.

Figure 4 shows an arrangement for evaluating a saliency determination.

Figure 5 illustrates an example of generated input data based on the MNIST dataset.

Figure 6A gives an example for a neural network picking up bias introduced into training data.

Figure 6B shows results of an evaluation of saliency determiners.

Figure 7 shows a flow diagram illustrating a method for evaluating a saliency map determiner according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention as defined in the appended claims. The various aspects of this disclosure are not necessarily mutually exclusive, as some aspects of this disclosure can be combined with one or more other aspects of this disclosure to form new aspects.

In the following, various examples will be described in more detail.

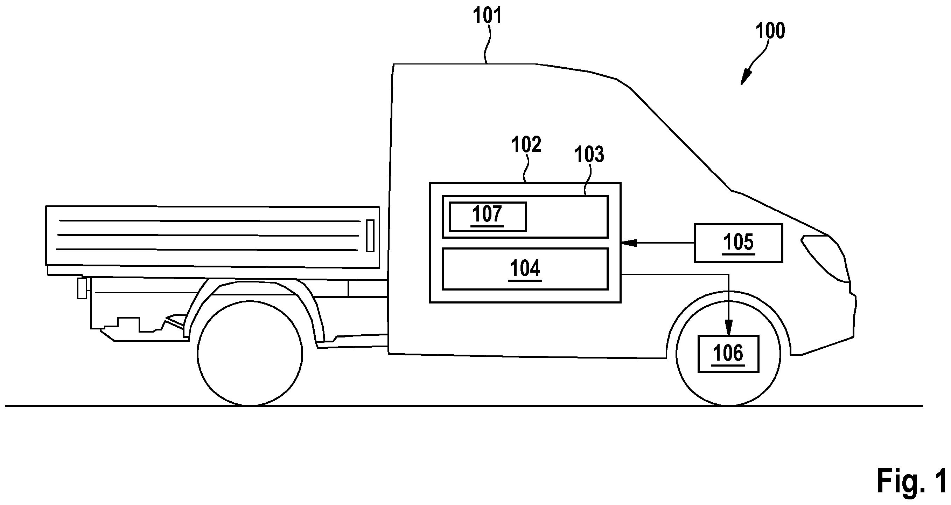

Figure 1 shows an example 100 for object detection in an autonomous driving scenario.

In the example of figure 1, a vehicle 101, for example a car, van or motorcycle is provided with a vehicle controller 102.

The vehicle controller 102 includes data processing components, e.g. a processor (e.g. a CPU (central processing unit)) 103 and a memory 104 for storing control software according to which the vehicle controller 102 operates and data on which the processor 103 operates.

For example, the stored control software includes instructions that, when executed by the processor 103, make the processor implement a neural network 107.

The data stored in memory 104 can include image data from one or more image sources 105, for example acquired by one or more cameras. An image can include a collection of data representing one or more objects or patterns. The one or more image sources 105 may for example output greyscale or colour pictures of the vehicle's environment. The one or more image sources 105 may be responsive to visible light or non-visible light such as e.g. infrared or ultraviolet light, ultrasonic or radar waves, or other electromagnetic or sonic signals.

The vehicle controller 102 may determine the presence of objects, e.g. fixed objects, such as traffic signs or road markings, and/or moving objects, such as pedestrians, animals and other vehicles, based on the image data.

The vehicle 101 may then be controlled by the vehicle controller 102 in accordance with the results of the object determination. For example, the vehicle controller 102 may control an actuator 106 to control the vehicle's speed, e.g. to actuate the brakes of the vehicle.

The control may be performed on the basis of an object classification performed by the neural network 107.

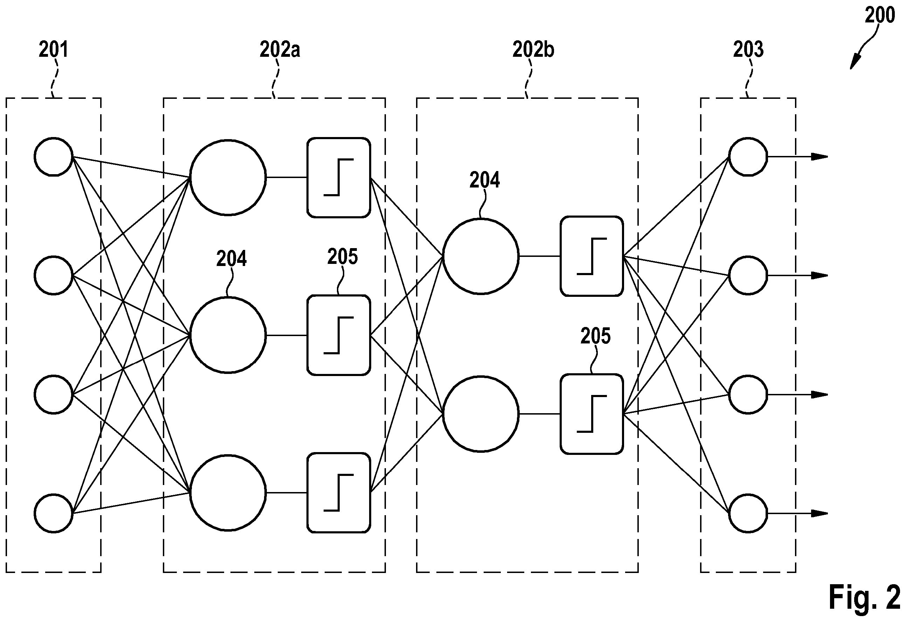

Figure 2 shows an example of a neural network 200 that can be used to classify images into a pre-defined number of classes.

In this example, the neural network 200 includes one input layer 201, two layers 202a and 202b and one output layer 203.

It should be noted that the neural network 200 is a simplified example of an actual deep neural network, e.g. a deep feed forward neural network, used for classification purposes, which may include many more processing nodes and layers.

The input data corresponds to the input layer 201, and can generally be seen as a multidimensional array of values, e.g. an input image can be seen as a 2-dimensional array of values corresponding to the pixel values of the image.

The inputs from the input layer 201 are then connected to processing nodes 204. A typical node 204 multiplies each input with a weight and sums the weighted values up. Additionally, a node 204 may add a bias to the sum.

The nodes 204 are typically each followed by a non-linear activation function 205, e.g. Rectified Linear Unit, ReLU ($f(x) = \max(x, 0)$) or a sigmoid function ( $f(x) = \dfrac{1}{1 + \exp(-x)}$ ). The resulting value is then output to the next layer.

Layers 202a and 202b may be hidden layers, e.g. fully connected layers, as shown in Figure 2, where every node of one layer is connected to every node of another layer.

The layers may also be (or be supplemented by) non-fully connected layers, e.g. convolutional or pooling layers in case of a convolutional neural network, CNN (typically followed by one or more hidden layers).

In a convolutional layer, the inputs are modified by convolutional filters. These filters operate on a subset of the input data, and may help to extract features of the input data, e.g. a particular shape or pattern. A filter implemented by the convolutional layer causes several corresponding nodes 204 of the convolutional layer to receive inputs from only a portion of the previous layer.

A pooling layer can be seen as a form of non-linear down-sampling, reducing the dimensions of the data by combining the outputs of several nodes into a single node in the next layer, e.g. by taking the maximum value of the outputs.

In a neural network designed for classification such as neural network 200, the output layer 203 receives values from at least one of the preceding layers, e.g. from a hidden layer 202b. These values may then be turned into probabilities by the output layer, e.g. by applying the softmax function ( $f(x) = \dfrac{\exp(v_i)}{\sum_{k=1}^{K} \exp(v_k)}$ , where $v_i$, i = 1,...,K, are the values received by the output layer) or the sigmoid function on them. The highest probability value contained in an output vector corresponds to a class prediction.

In the following, class predictions may also be referred to as predictions, predicted class labels or predicted classification labels.

An output vector of output layer 203 is thus a probability vector indicating, for each of the pre-defined classes, the probability that an image corresponds to the pre-defined class, e.g. that it shows a predefined object. For example, assuming there are 10 pre-defined classes (0, 1,..., 9) for the input image of a digit, the output vector is a vector consisting of 10 elements where each element corresponds to the probability for a digit. The class prediction will be the digit corresponding to the highest probability in the output vector. The output layer 203 may output the entire vector consisting of probability values, or only output the class predictions.

For being able to classify an image, the neural network 200 is first trained accordingly. In case of automotive driving, this may be done based on a collection of traffic scenes such as Cityscapes.

It should be noted in the above example, one image is classified, e.g. an image is classified as showing a pedestrian. However, e.g. in automotive driving scenarios, an image (e.g. taken by camera 105) typically includes a plurality of objects. Therefore, in such an application, dense prediction (or semantic segmentation) may be used which can be seen to classify each pixel of an image. For example, certain pixels may be classified to show a pedestrian while others are classified to show another vehicle. Such a dense prediction may be performed analogously using a neural network as explained above for image classification, with the difference that the output includes a class prediction per pixel of an image instead of a class prediction per image. The output for an image x may thus be another image which indicates the class prediction for each pixel (e.g. coded by colour, for example pedestrians green, vehicles red, background grey etc.), i.e. f(x) is itself an image with a plurality of channels corresponding to the possible class predictions. For semantic segmentation a CNN may be used.

In many real-world scenarios, presence of an object, its location and appearance are highly correlated with the contextual information surrounding this object, such as the presence of other nearby objects or more global scene semantics. For example, in the case of an urban street scene, a cyclist is more likely to co-occur on a bicycle and a car is more likely to appear on a road below sky and buildings. These semantic correlations are inherently present in real-world data. A data-driven model, such as a deep neural network 200, is prone to exploit these statistical biases in order to improve its prediction performance. An effective and safe utilization of deep learning models for real-world applications, e.g. autonomous driving, requires a good understanding of these contextual biases inherent in the data and the extent to which a learned model incorporated them into its decision making process. Otherwise, there is a risk that an object is wrongly classified, e.g. because it occurs in an unusual position.

Explainability is a core element of both model verification (did we build the model right?) and validation (did we build the right model?). Network models may typically be easily tricked into providing false, high confidence predictions and thus their true generalization performance has been often called into question. As with any other software component intended for deployment in the field, it is desirable to quantitatively establish the degree to which models can, from this perspective, be verified and validated, i.e. the degree to which a model has learned the desired input-to-output relationship.

A model working with limited (and thus inherently biased) datasets may be clearly over-parametrized in comparison to the amount of data available. This often produces a wide gap between what a model has actually learned and what the implementer thinks the model has learned.

As efforts to explain deep networks used for classification networks, saliency maps may be constructed, i.e. heatmaps over an input image which highlight which parts of the image were relevant or useful for classifying that image. Besides classification models, semantic segmentation is another use case that merits attention in this regard. Semantic segmentation models are especially prone to learning the previously mentioned inherent biases in their training dataset. For example, when learning to recognize common street scenes (e.g. as in the Cityscapes dataset), there are clear biases that the network will learn, for example, cars always drive on road. Other biases however might be an effect of missing or over-represented data and may represent relationships that may harm a model's generalization performance. It is therefore desirable to help explain these model predictions or segmentations.

A saliency method may explain predictions of a trained model (e.g. a trained neural network) by highlighting parts of the input that presumably have a high relevance for the model's predictions, i.e. by identifying the image pixels that contribute the most to the network prediction.

In the following, as an example, an approach for saliency determination, i.e. a saliency method is described which can be seen as an extension of a saliency method for image classification towards (pixel-level) dense prediction tasks and which allows generating spatially coherent explanations by exploiting spatial information in the dense predictions (and to spatially differentiate between prediction explanations).

In the following examples, this approach is referred to as grid saliency, which is a perturbation-based saliency method, based on a formulation as an optimization problem of identifying the minimum unperturbed area of the image needed to retain the network predictions inside a target object region. As grid saliency allows differentiating between objects and their associated context areas in the saliency map, it allows producing context explanations for semantic segmentation networks, discovering which contextual information most influences the class predictions inside a target object area.

Let $f : I \rightarrow O$ denote the prediction function, e.g. implemented by a deep neural network 200, which maps a grid input space $I = R^{H_I \times W_I \times C_I}$ (e.g. input images of an input image space) to a grid output space $O = R^{H_O \times W_O \times C_O}$ (e.g. output images of an output image space) where $W$ and $H$ are the respective width and height of the input (image) and output (image), and $C_I$ and $C_O$ are the number of input channels (e.g. 3 or 1 for images) and output prediction channels (e.g. number of classes for semantic segmentation).

In the following, images are considered as input and per-pixel dense predictions of the network are considered as output, i.e. the input is an image, $x \in I$ and the output is a per-pixel dense prediction f(x). Furthermore, it is for simplicity assumed that the input and output spatial dimensions are the same.

According to an embodiment, the grid saliency determination for the input image $x$ can be seen to be based on finding the smallest saliency (map) $M \in [0,1]^{H_I \times W_I}$ that must be retained in the image $x$ in order to preserve the network prediction f(x) in a request mask area $R \in \{0,1\}^{H_O \times W_O}$ for a class (e.g. channel) $c \in \{1,...,C_O\}$, wherein the size of a saliency is based on pixels values of M. For example, M is smaller than $M'$ if the $l_1$ norm of the pixel values of $M$ is smaller than the $l_1$ norm of the pixel values of $M'$.

According to various embodiments, grid saliency is based on a perturbation saliency approach. This means that a salient image region most responsible for a classifier decision (in a request area) is determined by replacing parts of the image with uninformative pixel values, i.e. perturbing the image, and evaluating the corresponding class prediction change.

Let $p$ denote a perturbation function that removes information from an image x outside of the saliency M (wherein outside means pixels for which M is not 1). For example, such perturbation function can be the interpolation between $x$ and $a \in I$, where a can be a constant colour image, Gaussian blur, or random noise. In this case, $p(x,M) = x \circ M + a \circ (1-M)$, wherein '$\circ$' denotes the Hadamard product.

It should be noted that in practice the saliency M may be defined on a lower resolution than the input image to avoid adversarial artefacts and may be later upsampled to the input image resolution. In addition, the pixel values of the perturbed image $p(x,M)$ may be clipped to preserve the range of the original image pixel value space.

Based on the above notation, the task of finding the saliency map M for the prediction of class c can be formulated as the optimization

$$M^*(x,c) = \operatorname*{argmin}_{M} \lambda \cdot \|M\|_1 + \| \max(f_c(x) - f_c(p(x,M)),0)\|_1 \qquad (1)$$

where $\|.\|_1$ denotes the $l_1$ norm and $f_c(x)$ is the network prediction for class c, i.e. the pixel value of the output image for the class (channel) c.

The first term on the right hand side of equation (1) can be considered as a mask loss that minimizes the salient image area such that the original image is perturbed as much as possible. The second term serves as a preservation loss that ensures that the network prediction $f_c(p(x,M))$ for class c on the perturbed image $p(x,M)$ reaches at least the confidence of the network prediction $f_c(x)$ on the original unperturbed input image. Thus, the second loss term can be considered as a penalty for not meeting the constraint $f_c(p(x,M)) > f_c(x)$, hence the use of $\max(\cdot,0)$ in equation (1). The parameter $\lambda$ controls the sparsity of M, i.e. controls how strongly the size of the saliency is punished. An exemplary value of $\lambda$ is 0.05 but other values are possibly to generate smaller or larger saliencies.

It is further possible to spatially disentangle explanations given in the saliency map M for the network predictions in the requested area of interest R from the explanations for the other predictions, by restricting the preservation loss to the request mask R in equation (1) according to

$$M^*_{\mathrm{grid}}(x,R,c) = \operatorname*{argmin}_{M} \lambda \cdot \|M\|_1 + \frac{\|R \circ \max(f_c(x) - f_c(p(x,M)),0))\|_1}{\|R\|_1} \qquad (2)$$

In the following, the result of equation (2) is referred to as a grid saliency map.

The grid saliency formulation from equation (2) may be adapted to specifically provide context explanations for the requested area of interest R. Context explanations are of particular interest for semantic segmentation, as context typically often serves as one of the main cues for semantic segmentation networks.

Thus, according to various embodiments, there is a focus on context explanations for semantic labelling predictions and it is assumed that R is the area covering an object of interest in the input image x. To optimize for salient parts of the object context, the object request mask R is integrated into the perturbation function. For the request mask R, the perturbed image $p(x,R) \in I$ contains only the object information inside R and all the context information outside R is removed (e.g. with a constant colour image a).

For optimization (i.e. determination of the saliency) this new perturbed image $p(x,R)$ is used instead of the maximally perturbed image $p(x,M=0) = a$ and the context perturbation function is $p_{\mathrm{context}}(x,R,M) = x \circ M + p(x,R) \circ (1 - M)$. In other words, the image information within R is pertained when the input image is perturbed (therefore, the saliency does not "need" to include the request area R).

The context saliency map for class c and request object R is then given by

$$M^*_{\text{context}}(x, R, c) = \operatorname*{argmin}_{M} \lambda \cdot \|M\|_1 + \frac{\|R \circ \max(f_c(x) - f_c(p_{\text{context}}(x, R, M)), 0)\|_1}{\|R\|_1} \tag{3}$$

This can be seen as optimizing of the saliency map to select the minimal context necessary to at least yield the original prediction for class c inside the request mask R.

It should be noted that the context saliency map may be seen as a special case of a grid saliency map since the perturbation takes a special form.

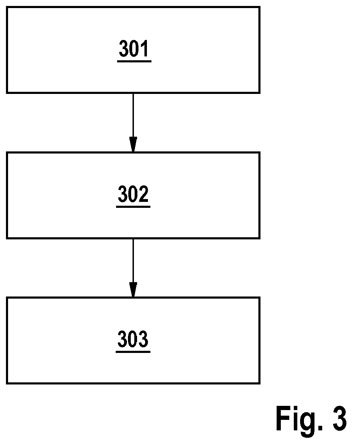

Figure 3 illustrates a saliency determination.

In 301, a neural network is trained for dense prediction, denoted by a function *f*.

In 302, given the network trained for *f* (the dense prediction task), an input image *x* and the prediction (map) of the network $f_c(x)$ for this input image and class c (e.g. output image channel c), a target area R in the prediction map for which the visual explanation is required is selected.

In 303, these components are used to define an optimization problem according to equation (3) which is solved to get a saliency map as a post-hoc explanation for the prediction in the target area R.

The optimization problem can be solved (i.e. the saliency map can be optimized) using various optimization techniques, such as stochastic gradient descent (SGD) with momentum or Adam. For example, for SGD, a momentum of 0.5 and a learning rate of 0.2 for 100 steps may be used and the saliency map may be initialized with 0.5 for each pixel. Another example is an optimization of a coarse 16 by 32 pixel mask using SGD with a learning rate of 1 for 80 steps.

In 304, the resulting saliency map is used for various purposes, e.g. as visual explanations for the network predictions, as well as for debugging the errors in the trained network and determination of the reliability of a classification.

Grid saliency can for example be used to enhance a trained model (e.g. any dense prediction network) by detecting biases picked up by the trained network via the obtained grid saliency maps. Obtained grid saliency maps can be used for anomaly detection by checking inconsistencies across the saliency explanations for the same semantic object class and identifying the cause of the anomaly by the obtained saliency map. More generally, it can be used to explain any unexpected model behaviour e.g. in case of erroneous predictions for corner cases, grid saliencies can be used to understand which part of the image (any data sample) is "an outlier" (abnormal) and contributes to the failure.

Grid saliency can in particular be used in an on-line diagnosis tool, e.g. in a controller such as vehicle controller 102.

It should be noted that while in the above examples the grid saliency is determined via perturbation it may also be determined based on other approaches such as in a gradient-based manner as explained in the following.

Let $G(x, c) = \partial f_c(x)/\partial x \in \mathbb{R}^{H_I \times W_I \times C_I}$ denote the gradient of the prediction fc for class c with respect to the input image $x \in I$. For VG (Vanilla Gradient), IG (Integrated Gradient) and SG (SmoothGrad) saliency the saliency maps are computed as

$$M^{\text{VG}}(x, c) = \sum_{C_I} \left| G(x, c) \right|, \qquad M^{\text{SG}}(x, c) = \sum_{C_I} \left| \frac{1}{n} \sum_{k=1}^{n} G\left(x + \mathcal{N}(0, \sigma^2), c\right) \right|,$$

$$M^{\text{IG}}(x, c) = \sum_{C_I} \left| \frac{1}{n} \sum_{k=1}^{n} G\left(\frac{k}{n}x, c\right) \right|,$$

$$\tag{4}$$

respectively, wherein n is the number of approximation steps for IG or the number of samples for SG, and $\mathcal{N}(0, \sigma^2)$ represents Gaussian noise with standard deviation σ.

Similarly to the perturbation-based approach, explanations given in the saliency M for the network predictions in the request area R are spatially disentangled from other predictions. For a given input x and a binary request mask R, the normalized network prediction score for class c in the request area R is denoted as

$$S(x, R, c) = \|R \circ f_c(x)\|_1 / \|R\|_1, \ S(x, R, c) \in \mathbb{R}.$$

Similarly to G(x, c), for grid saliency, $G_{\text{grid}}(x, R, c) := \partial S(x, R, c)/\partial x \in \mathbb{R}^{H_I \times W_I \times C_I}$ is defined which directly yields a grid saliency $M_{\text{grid}}^{\text{VG/SG/IG}}(x, R, c)$ by replacing G(x, c) in equation (4) with $G_{\text{grid}}(x, R, c)$. For the gradient-based context saliency, similarly to the perturbation-based approach, only salient pixels outside of the object area (i.e. region of interest) are considered, i.e.

$$M_{\text{context}}^{\text{VG/IG/SG}}(x, R, c) := (1 - R) \circ M_{\text{grid}}^{\text{VG/IG/SG}}(x, R, c).$$ (5)

It should be noted that gradient-based saliency maps are prone to be noisy. Thus, to circumvent this a spatial mean filter may be used on top of the saliency map with a $(W_I/W_S) \times (H_I/H_S)$ kernel and stride, where $W_S \times H_S$ is the resolution of the perturbation-based saliency map.

Nevertheless, a perturbation-based saliency determination may perform better, i.e. determine context with higher accuracy, than a gradient-based approach. However, this is not immediately apparent from the saliency approach used.

In view of that, according to a various embodiments, approaches for evaluating (or benchmarking) saliency determiners, e.g. quantitative quality metrics for saliency determination methods, are provided. Such metrics may in particular be used to show that the results from the grid saliency method described above are meaningful and non-random.

Thus, according to various embodiments, approaches for determining the trustworthiness and quality of a context saliency determination (or detection) method such as the grid saliency determination above are provided. Such an approach allows to quantitatively show to what extent a saliency determination method recognizes context biases. In principle, such an approach can be used to evaluate (or benchmark) any method that is intended to detect context biases in data.

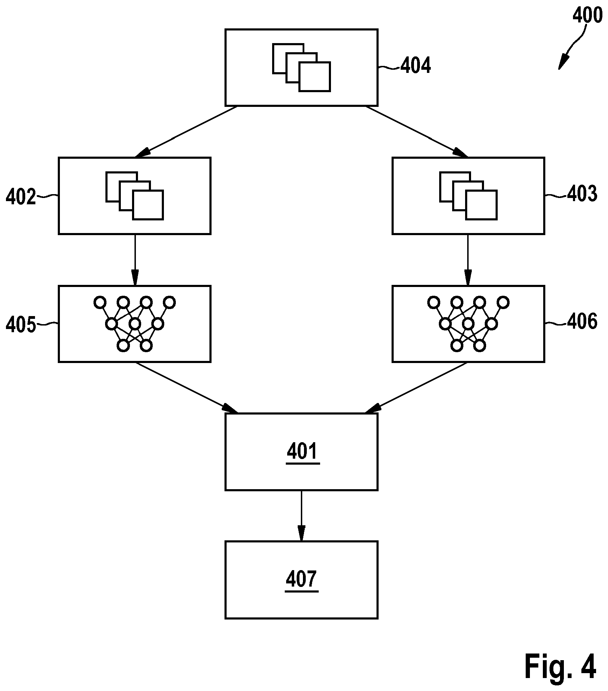

Figure 4 shows an arrangement 400 for evaluating a saliency determination.

The arrangement includes a context bias detector 401 which may be seen as an input for the evaluation method implemented by the arrangement 400. The context bias detector 401 is denoted as D and may for example implement the grid saliency method explained above. For example, but without limitation, this detector is configured to determine saliency for a neural network trained to recognize and localize the existence of specific object structures in the image, on the pixel level. For example, in the case of road scenes from the Cityscapes dataset, this could cars, pedestrians, riders, etc.

According to various embodiments, a family (set) of data generation processes P is provided which is used for creating a given data distribution in the appropriate input space (for example images, audio, video, etc.). This data generation process may for example be modelled by any data generating method such as using a Generative Adversarial Network, a manual process, or other alternatives.

For simplicity, the following explanation focuses on the image domain as the primary input modality, although as noted above other alternatives are possible. This means that in the following, a neural network is provided with input images, performs, for example, a classification or semantic segmentation of the input images and a context bias detector D determines context for the decisions of the neural network (e.g. a saliency map or a grid saliency map) and an evaluation method is used to evaluate the performance of the context bias detector. As a concrete example, for simplicity, classification of digits as present in the MNIST data set is given.

Let $P_{unbiased}$ be an element in P, i.e. a process generating an input data set for the neural network (input images with digits in the present example) which are unbiased in the following sense. $P_{unbiased}$ is configured to generate a data distribution which is constrained on the following terms:

1. Only one object as defined by the input data modality (e.g. input data modality says objects are digits) should be present in a given sample (i.e. one digit per input image). The object is considered "foreground", everything else in the sample (i.e. input image) is considered "background".

2. The background is evenly divided into parts. The process $P_{unbiased}$ is configured to generate its input data set such that each individual background part is "inpainted" with a different texture pattern, randomly drawn from a set of texture patterns.

3. Optionally, the process $P_{unbiased}$ is configured to generate its input data set such that the foreground is also inpainted with a randomly selected texture.

4. Optionally, the process $P_{unbiased}$ is configured such that the statistics of the generated samples (in the generated input data set) are balanced by making sure that all texture appear equally as background / foreground elements, or appear equally in combinations with other textures, etc.

The input data set generated by $P_{unbiased}$ is referred to as $P_{unbiased}$ data set. In the $P_{unbiased}$ data set, all foreground and background textures appear with (substantially) equal probability for all objects (digits).

Let $P_{biased}$ be another element in P which is a process configured to generate an input data set for the neural network (input images with digits in the present example) which are biased (in comparison to the dataset generated by $P_{unbiased}$).

$P_{biased}$ is configured much like $P_{unbiased}$, except that it is configured to generate an input data set (referred to as $P_{biased}$ data set) in which certain textures appear more frequently than others in the background, given by a probability which is a function of the object in the sample, i.e. specific textures are coupled with specific objects (digits in the present example). In an extreme case (when co-occurrence probability is 100%), a background texture appears in a sample (image) if and only if a specific object instance appears in the sample.

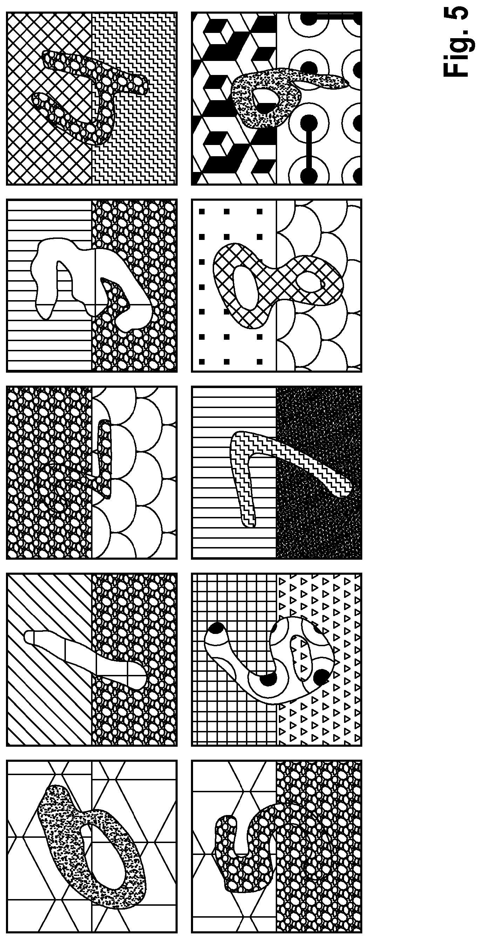

Figure 5 illustrates an example of generated input data based on the MNIST dataset.

The MNIST dataset can be used as a basis for $P_{biased}$ and $P_{unbiased}$. In this example, the foreground corresponds by definition to the digit present in the image, and background to everything else. The background is evenly segmented into two parts, each of which is inpainted with a random texture. Here, the foreground digits are also inpainted. $P_{biased}$ and $P_{unbiased}$ differ by the probability that a given object (digit) would appear together with a specific texture in the same image. It should be noted that a texture is an example here and other image features may be used (e.g. certain colour ranges etc.). Generally, objects may be correlated (in the biased data set) with certain patterns which may be textures for images but also other structures (or data point value combinations) for other kinds of input data.

The arrangement 400 includes an implementation 402 of the process $P_{biased}$ which is configured to generate a biased input data set, for example from a reference data set 404 such as the MNIST dataset. The arrangement 400 further includes an implementation 403 of $P_{unbiased}$ configured to generate an unbiased input data set from the reference data set 404.

It should be noted that MNIST is only an example for ease of explanation and other datasets may also be used, in particular datasets with traffic scenarios such as Cityscapes for an application in context of automotive driving.

A neural network is trained using the biased data set and, independently, the unbiased data set, to perform a classification or semantic segmentation of the input images, giving rise to two trained neural networks 405, 406.

The trained neural networks 405, 406 are applied to the unbiased data set to perform a classification or semantic segmentation of the input images of the unbiased data set. The saliency (or context) detector 401 and detects the saliency of the results provided by the neural networks 405, 406.

An evaluator 407 receives the saliencies determined by the detector 401 and evaluates the performance of the detector 401 in terms of its capability for saliency determination.

The evaluator 407 may use a metric as a basis for the evaluation of the performance of the detector. In the following, three examples for metrics are given which may be used to measure the ability of D to recognize context bias. All metrics may be computed as means over a set of objects O.

1. A first measure is the mean IoU (Intersection Over Union) difference between D applied to the neural network trained on $P_{biased}$ data set and evaluated on $P_{unbiased}$ data set, and D applied to the neural network both trained and evaluated on $P_{unbiased}$. Intuitively, because $P_{biased}$ associates objects with textures explicitly, a background texture $T$ associated with object O should also constitute positive evidence for classification of another instance of object O, even in a setting where the $T$ and O have not been associated (here: $P_{unbiased}$).

On the other hand, D applied to the neural network trained on the $P_{unbiased}$ dataset and evaluated on the $P_{unbiased}$ dataset should not determine any saliency (outside of the digits itself).

Thus, the IoU is for example measured between the original object mask (where in the image does O appear?) and the saliency returned by D for the neural network trained on $P_{biased}$ and evaluated on $P_{unbiased}$ (wherein it is here assumed that the saliency detector D is set to include the object itself in the saliency). Lower IoU values correspond to a stronger detection of the context bias since this means that D detects a large area of context outside of the object (digit) itself.

The first measure may in particular be used to evaluate to what extent a neural network is able to pick up a context bias present in training data.

2. A second measure is the mean CBD (context bias detection metric) which can be seen as a generalization of the first (IOU) measure described above by to including request masks of arbitrary sizes. As explained above in context of grid saliency, a request mask is the region of interest in the image which is chosen for optimization. For the first measure, it can be seen to be equivalent to the entire object (digit). For the second measure, it is generalized to e.g. different object subparts or components.

Let $C = 1-R$, i.e. let C be the parts of the input image x which are not the request mask R (which is e.g. the ground truth mask of the object in image x). Let c be the class assigned to the object at request mask R (i.e. assigned to the pixels of R). Using the definition of $M_{context}$ from equation (3) above (wherein the star and the arguments are omitted here for simplicity) the CBD metric is formally defined as

$$\mathrm{CBD}(x, R, c) = \|\mathrm{C} \circ M_{\mathrm{context}}(x, R, c)\|_1 / \|\mathrm{C}\|_1 \qquad (7)$$

Intuitively, a percentage of the background pixels that were marked as salient by D is computed.

The second measure may in particular be used to benchmark how well different saliency methods (e.g. perturbation- or gradient-based) can detect the context bias of a semantic segmentation neural network.

3. A third measure is a mean CBL metric (context bias localization metric) which can be seen as a more specific metric which includes in the metric of equation (7) a constraint on where the saliency determined by D is located. This means that only salient regions are taken into account that correspond to textures that have been positively associated with the current object in the input image.

Let $C_{bias}$ be a mask of an input image x that marks where texture $T$ appears for object O, where $T$, O have been associated via the data generation process $P_{biased}$. The CBL metric is then defined as follows:

$$\mathrm{CBL}(x, R, c) = \|\mathrm{C}_{\mathrm{bias}} \circ M_{\mathrm{context}}(x, R, c)\|_1 / \|\mathrm{C} \circ M_{\mathrm{context}}(x, R, c)\|_1 \qquad (8)$$

That is, this metric achieves its maximum when D delivers a saliency focused entirely on the background, and specifically on the parts of the background that correspond to the texture $T$ associated with the current object in the input image x. R is a subset of O, but for simplicity can be thought of spanning the entire object $O$. Intuitively, this quantifies how specifically attention is diverted from O to $T$ in the background. Higher percentages are indicative of that the input method D is highly capable of recognizing the context biases present in $P_{biased}$.

The third measure may in particular be used to benchmark the ability of different saliency methods to localize a context bias.

Each of the three metrics may be averaged (e.g. over multiple input images and/or object classes) to provide a mean metric. This is denoted in the following with a small 'm', i.e. mIOU, mCBD and mCBL.

$P_{biased}$ and $P_{unbiased}$ may be chosen to represent simple datasets in which context bias is clearly identifiable, such as in the example of figure 4 based on MNIST which also forms the basis of the following example.

For the following example, the process $P_{biased}$ is configured to generate two variants of a biased data set (from an unbiased data set $DS^{no-bias}$ of digits), a weakly biased version $DS^{w-bias}$ and a strongly biased version $DS^{s-bias}$. For the dataset with a strongly induced bias $DS^{s-bias}$, a specific texture appears if and only if a certain digit class is present. For a weakly induced bias $DS^{w-bias}$, a specific texture always appears along with the biased digit but also uniformly appears with other digits. For example, $P_{biased}$ chooses randomly 5 textures from a pool of 25 textures to induce context bias for one of 10 digits. For all 50 texture/digit combinations it generates a weakly and strongly biased dataset variant with train/test splits and the neural network is trained (independently) for both.

Regarding bias in the trained network, the evaluator 407 may first investigate whether the network trained on $DS^{w-bias}$ and the network trained on $DS^{s-bias}$ have picked up the induced weak and strong context biases in the training data. For this purpose, their performance may be evaluated in terms of mIoU on the unbiased dataset $DS^{no-bias}$.

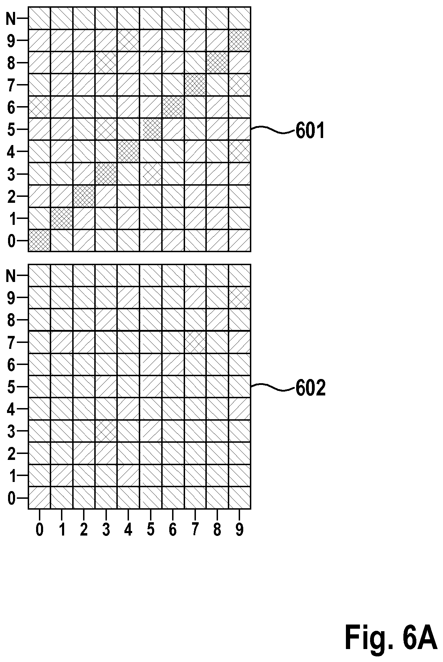

Figure 6A visualizes the digit-wise mIoU with respect to the biased digit for weak bias (top heat map 601) and strong bias (bottom heat map 602). The first rows of the heat maps 601, 602 (labelled as N) show the performance of the network trained on $DS^{no-bias}$. A clear drop in performance can be seen for biased digits (diagonal elements) in comparison to the first row. As expected, the performance drop is higher for the stronger bias. Moreover, the mIoU of the unbiased digits (non-diagonal elements) is also affected by the introduced bias. For example, introducing a bias for the digit nine leads to a decreased performance for the digit four (see second row of the heat maps 601, 602). This effect mostly occurs for the similar looking digits and presumably is caused by the fact that on the unbiased dataset the bias textures also occur with the unbiased digits, resulting in the confusion of similar looking digits for the network. From the observed mIoU drop for biased digits the evaluator 407 can conclude that the network 405 has picked up the introduced bias. However, in practical application, it may be impossible to collect fully unbiased data. Thus, the evaluator 407 may evaluate the ability of the detector 401 (e.g. grid saliency) to detect context bias only using biased data.

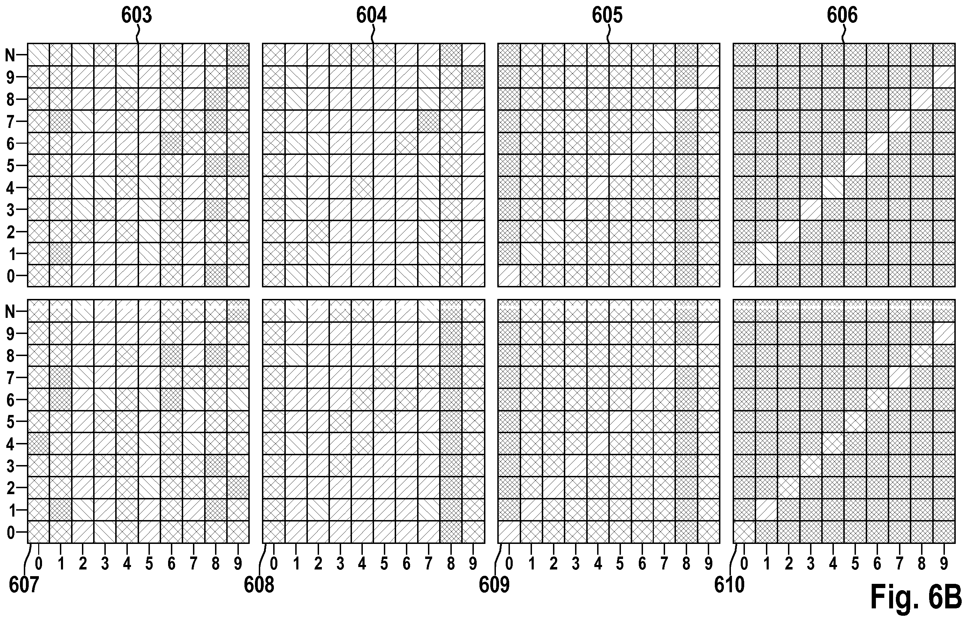

Figure 6B shows heat maps 603 to 610 illustrating the performance of saliency detection with VG, SG, IG, and grid saliency, respectively (from left to right) and weak bias (top heat maps 603 to 606) and strong bias (bottom heat maps 607 to 610), determined by using the CBD metric.

The heat maps give the mCBD values with respect to networks trained on data biased to different digits $DS^{s/w-bias}$ (y-axis) and for the different digit classes (x-axis) in the biased test set.

The only exception is the first row (labelled as N), where for comparison the results with no bias, for the network trained on $DS^{no-bias}$ are shown. It can be seen that grid saliency shows substantial evidence of context bias for digits with introduced bias (diagonal elements), both strong and weak. Even for the weak bias the grid saliency still clearly differentiates between biased and unbiased digits (diagonal vs. non-diagonal elements).

The context saliency extensions of gradient-based methods, i.e. VG, SG, and
IG are not able to reliably detect the context bias, while IG achieves a comparable performance to grid saliency. However, in contrast to the perturbation saliency, IG has also high mCBD values for unbiased digits, complicating its use in practice, as one would need to tune a reliable detection threshold, which is particularly challenging for weakly biased data.

The evaluator 407 may, in addition to the detection performance, evaluate how well the saliency detector 401 is able to localize the context bias using the mCBL measure. An evaluation shows that VG, IG, and SG have low localization performance, comparable to random guessing, while grid saliency is able to accurately localize the context bias on both strongly and weakly biased data.

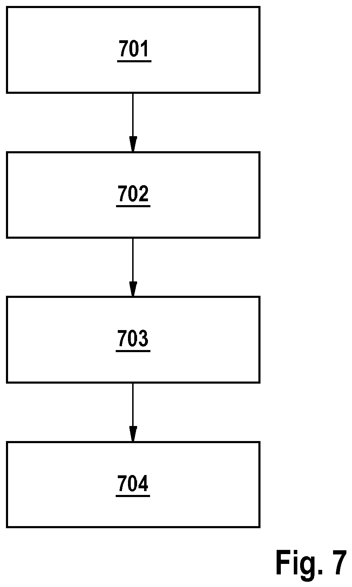

In summary, according to various embodiments, a method is provided as illustrated in figure 7.

Figure 7 shows a flow diagram 700 illustrating a method for evaluating a saliency map determiner according to an embodiment.

In 701, a predefined pattern is added to a plurality of training images to train a recognition of an object wherein each training image includes a representation of the object to be recognized.

In 702, the a neural network is trained with the plurality of training images which include the predefined pattern.

In 703, the saliency map determiner determines a saliency map for the object.

In 704, the saliency map determiner is evaluated based on whether the determined saliency map includes context for the object introduced by adding the predefined pattern.

According to various embodiments, in other words, training data is modified such that certain objects are correlated with certain patterns in the training data. Thus, a certain bias is introduced in the training data. Since it can be assumed that a neural network takes that bias into account when recognizing the object, a saliency map determiner is supposed to include the pattern at least partially in the saliency map.

For example, for a neural network trained to identify an object in an image, an original training data set is provided which includes images which includes objects (or generally image features, such as regions of a certain depth or motion) and for at least one object a region whose content is uncorrelated with the object (for example with content is constant). A region being uncorrelated with an object may be understood as that the distribution of objects in training data set is (substantially) independent from the content of the region. An example for such a region is the background in the MNIST images: the content of the background (black) is uncorrelated with the objects (digits).

For an image with such an object and such an uncorrelated region, the image is modified such that the region includes content which is correlated with the region.

This means that for one or more images for at least one object, content of uncorrelated regions is changed such that content of uncorrelated regions (in the original training set) becomes correlated with the appearance of the object in the images in the modified training set. In the MNIST example, as described above a certain texture may for example introduced in the background for a certain digit such that the content of the image region (background in this example) becomes correlated with the object (digit).

The result of the modification of the training data set for training data units (e.g. images) and possibly multiple objects (e.g. object images) results in a modified training data set (referred to as biased training data set in the above examples).

A neural network is now trained based on the modified training data set and the neural network behaviour is analysed by means of neural network analysing tool indicating context of network decisions (i.e. a saliency determiner). The network analysing tool may then be evaluated based on whether it identifies context in the correlated regions, e.g. indicates the correlated regions as salient.

In other words, bias is introduced into training data and it is evaluated whether the saliency determiner is capable to detect that a neural network uses the introduced bias.

A generated saliency determination result, e.g. a grid saliency map, may be used as a basis for computation of a control signal for controlling a physical system, like e.g. a computer-controlled machine, like a robot, a vehicle, a domestic appliance, a power tool, a manufacturing machine, a personal assistant or an access control system or a system for conveying information, like a surveillance system or a medical (imaging) system in order to interpret and understand decision making process of the neural network used in the above physical system. It does so by generating low-level visual explanations (e.g. grid saliency maps). In particular, the result image allows identifying the cause of the anomaly by analysing explanations given by the result image. The determined saliency may be used by a controller as a basis for forming a decision based on the neural network output.

The method of evaluating a saliency map determiner provided according to various embodiments may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

**Claims**

1. A method of evaluating a saliency map determiner, performed by one or more processors, the method comprising:

   • adding (701) a predefined pattern to a plurality of training images to train a recognition of an object wherein each training image includes a representation of the object to be recognized wherein adding the predefined pattern to the plurality of training images comprises adding the predefined pattern to training images in correlation with the object;
   • training (702) a neural network (107, 200) for object classification or semantic segmentation with the plurality of training images which include the predefined pattern;
   • the saliency map determiner determining (703) a saliency map indicating context of network decisions for the object, wherein the context is an area surrounding a plurality of image data values representing the object in an image which affects the classification or semantic labelling of the plurality of image data values as representing the object; and
   • evaluating (704) bias detection by the saliency map determiner for the neural network, wherein the bias detection for the neural network includes, in case of wrong classification or semantic segmentation by the neural network, determining image parts contributing to the wrong classification or semantic segmentation by using inconsistencies across saliency explanations for the object provided by the saliency map determiner, by determining whether the determined saliency map comprises context for the object introduced by adding the predefined pattern.

2. The method of claim 1, comprising evaluating the bias detection by the saliency map determiner based on a comparison of context for the object for the neural network (107, 200) being trained on training image data without adding the predefined pattern in correlation with the object and context for the object for the neural network (107, 200) being trained on training image data with adding the predefined pattern in correlation with the object.

3. The method of any one of claims 1 to 2, comprising evaluating the bias detection by the saliency map determiner based on an overlap of a region of the image representing an instance of the object and a region of the saliency map for the instance of the object of the image.

4. The method of any one of claims 1 to 3, comprising evaluating the bias detection by the saliency map determiner based a context specified by the saliency map outside a request region.

5. The method of any one of claims 1 to 4, wherein evaluating the bias detection by the saliency map determiner based on whether the determined saliency map comprises context for the object introduced by adding the predefined pattern comprises

   • determining whether the saliency map comprises a representation of the predefined pattern; and
   • evaluating the bias detection by the saliency map determiner based on whether the determined saliency map comprises a representation of the predefined pattern.

6. The method of any one of claims 1 to 5, wherein the plurality of training images is part of a training data set including a multiplicity of further training images and the neural network (107, 200) is trained with the training data set.

7. The method of claims 6, wherein at least some of the further training images do not contain the object.

8. The method of claims 6 or 7, wherein at least some of the further training images contain a further object.

9. The method of any one of claims 1 to 8, comprising, after training the neural network (107, 200), applying the neural network (107, 200) on a image comprising an instance of the object and the pattern and determining the saliency map based on the output of the neural network (107, 200).

10. The method of any one of claims 1 to 9, comprising checking whether the neural network (107, 200) has learned a correlation between the pattern and the object and evaluating the bias detection by the saliency map determiner if the neural network (107, 200) has learned the correlation between the pattern and the object.

**11.** The method of claim 1, wherein the predefined pattern is a predefined combination of image data values.

**12.** The method of claim 11, wherein each of the plurality of training images comprises an instance of the object and adding the predefined pattern to a training image comprises changing image data values of the training image other than image data values of the instance of the object to the predefined combination of image values.

**13.** The method of any one of claims 1 to 12, comprising training the neural network (107, 200) to identify the object.

**14.** The method of any one of claims 1 to 13, wherein the pattern comprises a texture.

**15.** Device configured to perform a method of any one of claims 1 to 14.

**Patentansprüche**

**1.** Verfahren zum Evaluieren eines Salienzkartenbestimmers, der durch einen oder mehrere Prozessoren durchgeführt wird, wobei das Verfahren Folgendes umfasst:

• Hinzufügen (701) eines vordefinierten Musters zu einer Mehrzahl von Trainingsbildern, um eine Erkennung eines Objekts zu trainieren, wobei jedes Trainingsbild eine Repräsentation des zu erkennenden Objekts beinhaltet, wobei das Hinzufügen des vordefinierten Musters zu der Mehrzahl von Trainingsbildern das Hinzufügen des vordefinierten Musters zu Trainingsbildern in Korrelation mit dem Objekt umfasst;
• Trainieren (702) eines neuronalen Netzwerks (107, 200) zur Objektklassifizierung oder semantischen Segmentierung mit der Mehrzahl von Trainingsbildern, die das vordefinierte Muster beinhalten;
• der Salienzkartenbestimmer bestimmt (703) eine Salienzkarte, die Kontext von Netzwerkentscheidungen für das Objekt angibt, wobei der Kontext ein Bereich ist, der eine Mehrzahl von Bilddatenwerten umgibt, die das Objekt in einem Bild repräsentieren, das die Klassifizierung oder semantische Kennzeichnung der Mehrzahl von Bilddatenwerten als das Objekt repräsentierend beeinflusst; und
• Evaluieren (704) einer Bias-Detektion durch den Salienzkartenbestimmer für das neuronale Netzwerk, wobei die Bias-Detektion für das neuronale Netzwerk im Fall einer falschen Klassifizierung oder semantischen Segmentierung durch das neuronale Netzwerk das Bestimmen von Bildteilen, die zu der falschen Klassifizierung oder semantischen Segmentierung beitragen, durch Verwenden von Inkonsistenzen über Salienzerklärungen für das durch den Salienzkartenbestimmer bereitgestellte Objekt beinhaltet, durch Bestimmen, ob die bestimmte Salienzkarte einen Kontext für das durch Hinzufügen des vordefinierten Musters eingeführte Objekt umfasst.

**2.** Verfahren nach Anspruch 1, umfassend das Evaluieren der Bias-Detektion durch den Salienzkartenbestimmer, basierend auf einem Vergleich des Kontexts für das Objekt für das neuronale Netzwerk (107, 200), das auf Trainingsbilddaten trainiert wird, ohne das vordefinierte Muster in Korrelation mit dem Objekt hinzuzufügen, und des Kontexts für das Objekt für das neuronale Netzwerk (107, 200), das auf Trainingsbilddaten trainiert wird, mit dem Hinzufügen des vordefinierten Musters in Korrelation mit dem Objekt.

**3.** Verfahren nach einem der Ansprüche 1 bis 2, umfassend das Bewerten der Bias-Detektion durch den Salienzkartenbestimmer, basierend auf einer Überlappung eines Bereichs des Bildes, der eine Instanz des Objekts repräsentiert, und eines Bereichs der Salienzkarte für die Instanz des Objekts des Bildes.

**4.** Verfahren nach einem der Ansprüche 1 bis 3, umfassend das Evaluieren der Bias-Detektion durch den Salienzkartenbestimmer, basierend auf einem Kontext, der durch die Salienzkarte außerhalb eines Anforderungsgebiets spezifiziert wird.

**5.** Verfahren nach einem der Ansprüche 1 bis 4, wobei das Evaluieren der Bias-Detektion durch den Salienzkartenbestimmer, basierend darauf umfasst, ob die bestimmte Salienzkarte einen Kontext für das durch Hinzufügen des vordefinierten Musters eingeführte Objekt umfasst

• Bestimmen, ob die Salienzkarte eine Repräsentation des vordefinierten Musters umfasst; und
• Evaluieren der Bias-Detektion durch den Salienzkartenbestimmer basierend darauf, ob die bestimmte Salienzkarte eine Repräsentation des vordefinierten Musters umfasst.

**6.** Verfahren nach einem der Ansprüche 1 bis 5, wobei die Mehrzahl von Trainingsbildern Teil eines Trainingsdatensatzes ist, der eine Vielzahl weiterer Trainingsbilder beinhaltet, und das neuronale Netzwerk (107, 200) mit dem Trainingsdatensatz trainiert ist.

7. Verfahren nach Anspruch 6, wobei mindestens einige der weiteren Trainingsbilder das Objekt nicht enthalten.

8. Verfahren nach Anspruch 6 oder 7, wobei mindestens einige der weiteren Trainingsbilder ein weiteres Objekt enthalten.

9. Verfahren nach einem der Ansprüche 1 bis 8, umfassend, nach dem Trainieren des neuronalen Netzwerks (107, 200), das Anwenden des neuronalen Netzwerks (107, 200) auf ein Bild, das eine Instanz des Objekts und des Musters umfasst, und das Bestimmen der Salienzkarte basierend auf der Ausgabe des neuronalen Netzwerks (107, 200).

10. Verfahren nach einem der Ansprüche 1 bis 9, umfassend Prüfen, ob das neuronale Netzwerk (107, 200) eine Korrelation zwischen dem Muster und dem Objekt gelernt hat, und Evaluieren der Bias-Detektion durch den Salienzkartenbestimmer, falls das neuronale Netzwerk (107, 200) die Korrelation zwischen dem Muster und dem Objekt gelernt hat.

11. Verfahren nach Anspruch 1, wobei das vordefinierte Muster eine vordefinierte Kombination von Bilddatenwerten ist.

12. Verfahren nach Anspruch 11, wobei jedes der Mehrzahl von Trainingsbildern eine Instanz des Objekts umfasst und das Hinzufügen des vordefinierten Musters zu einem Trainingsbild das Ändern von Bilddaten-Werten des Trainingsbildes außer Bilddaten-Werten der Instanz des Objekts zu der vordefinierten Kombination von Bildwerten umfasst.

13. Verfahren nach einem der Ansprüche 1 bis 12, umfassend das Trainieren des neuronalen Netzwerks (107, 200), um das Objekt zu identifizieren.

14. Verfahren nach einem der Ansprüche 1 bis 13, wobei das Muster eine Textur umfasst.

15. Vorrichtung, die konfiguriert ist, ein Verfahren nach einem der Ansprüche 1 bis 14 durchzuführen.


**Revendications**

1. Procédé d'évaluation d'un déterminateur de carte de saillance, réalisé par un ou plusieurs processeurs, le procédé comprenant :

   • l'ajout (701) d'un motif prédéfini à une pluralité d'images d'entraînement afin d'entraîner une reconnaissance d'un objet, chaque image d'entraînement comportant une représentation de l'objet à reconnaître, l'ajout du motif prédéfini à la pluralité d'images d'entraînement comprenant l'ajout du motif prédéfini à des images d'entraînement en corrélation avec l'objet ;
   • l'entraînement (702) d'un réseau de neurones (107, 200) pour la classification d'objets ou la segmentation sémantique avec la pluralité d'images d'entraînement comportant le motif prédéfini ;
   • la détermination (703), par le déterminateur de carte de saillance, d'une carte de saillance indiquant le contexte de décisions du réseau pour l'objet, le contexte étant une zone entourant une pluralité de valeurs de données d'image représentant l'objet dans une image qui affecte la classification ou l'étiquetage sémantique de la pluralité de valeurs de données d'image comme représentant l'objet ; et
   • l'évaluation (704) d'une détection de biais par le déterminateur de carte de saillance pour le réseau de neurones, la détection de biais pour le réseau de neurones comportant, en cas de classification ou de segmentation sémantique erronée par le réseau de neurones, la détermination des parties d'image contribuant à la classification ou segmentation sémantique erronée à l'aide d'incohérences entre des explications de saillance pour l'objet fournies par le déterminateur de carte de saillance, par détermination de la présence ou non, dans la carte de saillance déterminée, d'un contexte pour l'objet introduit par l'ajout du motif prédéfini.

2. Procédé selon la revendication 1, comprenant l'évaluation de la détection de biais par le déterminateur de carte de saillance sur la base d'une comparaison entre le contexte pour l'objet pour le réseau de neurones (107, 200) qui est entraîné sur des données d'image d'entraînement sans ajout du motif prédéfini en corrélation avec l'objet et le contexte pour l'objet pour le réseau de neurones (107, 200) qui est entraîné sur des données d'image d'entraînement avec ajout du motif prédéfini en corrélation avec l'objet.

3.  Procédé selon l'une quelconque des revendications 1 à 2, comprenant l'évaluation de la détection de biais par le déterminateur de carte de saillance sur la base d'un chevauchement entre une région de l'image représentant une instance de l'objet et une région de la carte de saillance pour l'instance de l'objet de l'image.

4.  Procédé selon l'une quelconque des revendications 1 à 3, comprenant l'évaluation de la détection de biais par le déterminateur de carte de saillance sur la base d'un contexte spécifié par la carte de saillance en dehors d'une région de requête.

5.  Procédé selon l'une quelconque des revendications 1 à 4, dans lequel l'évaluation de la détection de biais par le déterminateur de carte de saillance sur la base de la présence ou non, dans la carte de saillance déterminée, d'un contexte pour l'objet introduit par l'ajout du motif prédéfini comprend

    • la détermination de la présence ou non, dans la carte de saillance, d'une représentation du motif prédéfini ; et
    • l'évaluation de la détection de biais par le déterminateur de carte de saillance sur la base de la présence ou non, dans la carte de saillance déterminée, d'une représentation du motif prédéfini.

6.  Procédé selon l'une quelconque des revendications 1 à 5, dans lequel la pluralité d'images d'entraînement fait partie d'un ensemble de données d'entraînement comportant une multiplicité d'images d'entraînement supplémentaires, et le réseau de neurones (107, 200) est entraîné avec l'ensemble de données d'entraînement.

7.  Procédé selon la revendication 6, dans lequel au moins certaines des images d'entraînement supplémentaires ne contiennent pas l'objet.

8.  Procédé selon les revendications 6 ou 7, dans lequel au moins certaines des images d'entraînement supplémentaires contiennent un objet supplémentaire.

9.  Procédé selon l'une quelconque des revendications 1 à 8, comprenant, après l'entraînement du réseau de neurones (107, 200), l'application du réseau de neurones (107, 200) à une image comprenant une instance de l'objet, et le motif et la détermination de la carte de saillance sur la base de la sortie du réseau de neurones (107, 200).

10. Procédé selon l'une quelconque des revendications 1 à 9, comprenant la vérification de si le réseau de neurones (107, 200) a appris ou non une corrélation entre le motif et l'objet, et l'évaluation de la détection de biais par le déterminateur de carte de saillance si le réseau de neurones (107, 200) a appris la corrélation entre le motif et l'objet.

11. Procédé selon la revendication 1, dans lequel le motif prédéfini est une combinaison prédéfinie de valeurs de données d'image.

12. Procédé selon la revendication 11, dans lequel chacune de la pluralité d'images d'entraînement comprend une instance de l'objet, et l'ajout du motif prédéfini à une image d'entraînement comprend la modification de valeurs de données d'image de l'image d'entraînement autres que des valeurs de données d'image de l'instance de l'objet afin d'obtenir la combinaison prédéfinie de valeurs d'image.

13. Procédé selon l'une quelconque des revendications 1 à 12, comprenant l'entraînement du réseau de neurones (107, 200) pour identifier l'objet.

14. Procédé selon l'une quelconque des revendications 1 à 13, dans lequel le motif comprend une texture.

15. Dispositif configuré pour réaliser un procédé selon l'une quelconque des revendications 1 à 14.

Fig. 1

EP 3 767 534 B1

Fig. 2

```
┌─────────────────────────┐
│                         │
│           301           │
│                         │
└───────────┬─────────────┘
            │
            ▼
┌─────────────────────────┐
│                         │
│           302           │
│                         │
└───────────┬─────────────┘
            │
            ▼
┌─────────────────────────┐
│                         │
│           303           │
│                         │
└─────────────────────────┘
```

Fig. 3

Fig. 4

Fig. 5

Fig. 6A

Fig. 6B

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Regularizing Black-box Models for Improved Interpretability (HILL 2019 Version. **GREGORY PLUMB et al.** Arxiv.org. Cornell University Library, 31 May 2019
- **KAREN SIMONYAN** ; **ANDREA VEDALDI** ; **ANDREW ZISSERMAN**. Deep inside convolutional networks: Visualising image classification models and saliency maps. *International Conference on Learning Representations (ICLR)*, 2013

- Grid Saliency for Context Explanations of Semantic Segmentation. **AHMADI MAHDI et al.** Arxiv.org. Cornell University Library, 30 July 2019
- Stochastic Context-Aware Saliency Detection. **BO GAO et al.** Computer and Management (CAMAN). IEEE, 19 May 2011